# FASCICULE DE BREVET EUROPEEN

(11) **EP 3 310 713 B1**
(45) Date de publication et mention de la délivrance du brevet: **20.11.2024**
(21) Numéro de dépôt: 16739225.7
(22) Date de dépôt: 16.06.2016
(51) Int. Cl.: C01G 13/00, A62D 3/33

(54) **PROCÉDÉ DE STABILISATION DE MERCURE MÉTALLIQUE**
VERFAHREN ZUR STABILISIERUNG VON METALLISCHEM QUECKSILBER
METHOD FOR STABILIZING METALLIC MERCURY

(30) Priorité: 17.06.2015 FR 1555521
(43) Date de publication de la demande: 25.04.2018
(73) Titulaire: Sarp Industries, 78520 Limay (FR)
(72) Inventeur: HYVRARD, François, 78670 Villennes Sur Seine (FR); BORRINI, Julien, 69360 Ternay (FR); OFFENTHALER, Dieter, 3627 Heimberg (CH); IBARZ FORMATGER, Xavier, 3752 Wimmis (CH)
(74) Mandataire: Plasseraud IP
(86) Numéro de dépôt international: PCT/FR2016/051465
(87) Numéro de publication internationale: WO 2016/203162

(56) Documents cités:
- US-A- 3 061 412
- US-A- 4 147 626
- US-B1- 6 403 044

## Description

La présente invention concerne un procédé de stabilisation de mercure métallique sous forme de sulfure de mercure en vue notamment d'un stockage définitif ou réversible.

Le mercure a été largement utilisé dans la période historique récente pour des applications industrielles et domestiques : chimie (en particulier chimie du chlore et des polymères), piles et batteries, instruments de mesure, amalgames dentaires. L'extraction pétrolière et gazière est confrontée à la pollution naturelle de certains gisements par ce composé qu'il faut extraire et éliminer des hydrocarbures. Les activités d'extraction minières sont aussi concernées ainsi que les activités, souvent illégales, d'orpaillage.

La toxicité du mercure pour les milieux naturels et les organismes vivants est bien connue. Le mercure métallique ou élémentaire est toxique pour les systèmes nerveux central et périphérique. L'inhalation de vapeurs de mercure peut avoir des effets nocifs sur les systèmes nerveux, digestif et immunitaire, et sur les poumons et les reins, et peut être fatale.

Des troubles neurologiques et comportementaux peuvent être observés après exposition au mercure métallique par inhalation. Les symptômes sont notamment les suivants: tremblements, insomnies, pertes de mémoire, effets neuromusculaires, maux de tête et dysfonctionnements moteurs et cognitifs. Des signes infracliniques modérés peuvent être observés chez des personnes ayant été exposées au travail à une concentration de mercure métallique dans l'air de 20 µg/m3 ou plus pendant plusieurs années. Des répercussions sur les reins ont également été constatées, allant de l'augmentation du taux de protéines dans l'urine jusqu'à l'insuffisance rénale.

Des mesures sont prises au niveau international pour contrôler et limiter l'utilisation du mercure métallique et de ces composés. On peut citer la Convention de Minamata dans le cadre du Programme des Nations Unies pour l'environnement, demandant d'engager une action internationale pour gérer le mercure de manière efficiente, effective et cohérente, décision 25/5 adoptée le 20 février 2009. Au niveau Européen, on peut citer le Règlement (CE) N° 1102/2008 du Parlement européen et du Conseil du 22 octobre 2008 relatif à l'interdiction des exportations de mercure métallique et de certains composés et mélanges de mercure et au stockage en toute sécurité de cette substance.

Du fait de ces engagements, une quantité importante de mercure ne peut plus être recyclé et réutilisée en particulier le mercure issu de l'industrie du chlore et de la soude, de l'épuration du gaz naturel, des opérations d'extraction et de fusion des métaux non ferreux et de l'extraction du minerai de cinabre dans l'Union européenne. La quantité de mercure métallique liquide concernée est estimée à environ 12 000 tonnes à l'horizon 2020-2025.

Dans ce contexte, il convient de développer des procédés industriels permettant de solidifier et de stabiliser ce métal sous une forme permettant un stockage et une manipulation en toute sécurité. Le composé de mercure obtenu peut ensuite être stocké dans des installations de stockage de déchets dangereux comme par exemple les sites de stockage souterrains.

Au niveau des différentes technologies permettant de stabiliser le mercure métallique, on peut distinguer trois grands principes : la formation d'un amalgame avec un autre métal, l'inclusion du mercure dans une matrice, le plus souvent minérale mais parfois organique et enfin la formation de sulfure de mercure.

Des procédés de stabilisation du mercure métallique reposant sur la formation d'un amalgame avec du cuivre sont par exemple décrit dans le brevet US 6,312,499 et la demande de brevet US 2008/0234529. Ce type de méthode exige une source de métal noble ce qui n'est pas favorable pour le bilan environnemental global et pour l'économie du système. La quantité de résidu final devant être stocké peut être importante. Un autre inconvénient de ce type de méthode est que les amalgames, bien que solides, montrent une tension de vapeur et une solubilité significatives du mercure et posent ainsi un souci au niveau de leur stabilité.

La méthode la plus utilisée pour traiter le mercure est la transformation du mercure en sulfure de mercure. Le sulfure de mercure est une forme stable du mercure que l'on trouve dans des minerais. On observe deux formes cristallines principales : l'une de couleur rouge, le cinabre (le pigment vermillon très recherché depuis l'antiquité), l'autre de couleur noir, le métacinabre. Leur structure cristalline est différente, le cinabre est hexagonal et le métacinabre est cubique. Cependant leurs propriétés chimiques et physiques sont très proches. Les deux composés sont insolubles dans l'eau froide et l'acide nitrique et solubles dans l'eau régale.

Les demandes de brevets WO 2006/016076, DE 102012102981, DE 102007061791 et EP 2072468 décrivent des procédés mettant en oeuvre la réaction entre du mercure métallique et du soufre élémentaire. Ces méthodes nécessitent généralement des mesures compliquées et énergivores ainsi qu'un important excès de soufre pour arriver à une conversion complète.

La demande WO 2006/016076 décrit par exemple un procédé de stabilisation du mercure métallique avec du soufre à l'état solide dans un réacteur rotatif permettant de mélanger le mercure et le soufre de façon non intrusive. Malgré l'obtention d'un sulfure de mercure qui semble satisfaire aux exigences réglementaires françaises en terme de lixiviation, des gouttelettes de mercures dans le produit final sont observées dans certains essais et la tension de vapeur de mercure dans le réacteur reste notable.

La demande de brevet DE 102012102981 décrit la stabilisation du mercure métallique sous forme de sulfure de mercure par une réaction liquide-liquide de mercure métallique avec du soufre à l'état fondu à une température de 120-150°C dans un réacteur à contre-courant. En plus du coût énergétique apparent de ce procédé, la demande ne fournit aucune donnée permettant de juger de la performance de la transformation et de la qualité du sulfure de mercure obtenu.

La demande de brevet DE102007061791 décrit un procédé de préparation de sulfure de mercure à partir de mercure métallique et soufre élémentaire. Ce procédé est conduit à des températures élevées, notamment autour de la température d'ébullition du mercure, avantageusement couplées à une pression légèrement inférieure à la pression atmosphérique. Un excès de souffre de 18 à 44% au-delà de la stoechiométrie est recommandé afin de garantir une réaction complète du mercure.

La demande de brevet EP2072468 A1 décrit un procédé de transformation de mercure métallique et de soufre en sulfure de mercure en phase gazeuse. La température du procédé est supérieure à 500 voire 580°C, au-delà du point d'ébullition du sulfure de mercure. Le sulfure de mercure est alors extrait en phase gazeuse, refroidit à 50°C par une aspersion d'eau et séparé ensuite de l'eau.

En résumé, toutes ces méthodes mettant en oeuvre la réaction entre du mercure métallique et du soufre nécessitent des mesures compliquées et énergivores. Elles nécessitent en général également un important excès de soufre pour arriver à une conversion complète.

L'utilisation de solutions aqueuses de polysulfures a également été proposée. Ainsi le brevet US 6,403,044 décrit par exemple un procédé de stabilisation du mercure métallique dans lequel le mercure ou un déchet contenant du mercure est stabilisé en plusieurs étapes de mélange. D'abord, un mélange d'agent d'amalgamation composé de produits soufrés ou autre (à l'exclusion de polysulfures) est mélangé au déchet de mercure. Ce mélange est malaxé une première fois. Une charge composée de matériaux microporeux (terre, sable, ciment, gel de silice, perlite, charbon actif...) et d'eau est ajouté à ce premier mélange. Ce nouveau mélange est à nouveau malaxé. Une solution de polysulfure est ajoutée afin d'activer la réaction entre le mercure et le mélange d'amalgamation. Ce dernier mélange est malaxé à nouveau. Si le solide obtenu présente un faible taux de lixiviation, il contient encore 600 ppm de mercure libre au dire des auteurs. En absence d'ajout de charge, les résultats sont moins bons, à la fois en termes de taux de lixiviation et de mercure libre.

Le brevet américain US 3,061,412 décrit un procédé de préparation de sulfure de mercure pour la fabrication de pigments. Ce procédé est basé sur la conversion de mercure métallique (Hg) en sulfure de mercure (HgS) par du soufre élémentaire en présence d'une solution de soufre alcalin ou de polysulfure. Dans les conditions de réaction exposées dans le brevet et comme explicitement décrit par les inventeurs, le polysulfure ne réagit pas avec le mercure mais sert de catalyseur pour la réaction en phase hétérogène (liquide-solide) entre le mercure métallique et le soufre élémentaire.

Malgré ces nombreux travaux et brevets décrivant des procédés de stabilisation et de transformation du mercure, peu d'installations de taille industrielle sont actuellement en fonctionnement.

Il existe donc toujours un réel besoin d'un procédé de stabilisation du mercure métallique permettant la transformation du mercure en un composé stable avec des rendements élevés, avoisinant de préférence la conversion totale.

Un objectif de l'invention est ainsi de proposer un procédé simple et efficace mettant en oeuvre des réactifs peu onéreux.

Il est ainsi du mérite des inventeurs d'avoir trouvé qu'il était possible de transformer du mercure métallique en sulfure de mercure avec un taux de rendement proche de la conversion totale en mettant en oeuvre une solution aqueuse de polysulfure et des moyens de dispersion du mercure métallique dans la solution aqueuse de polysulfure.

Ainsi, un objet de l'invention est un procédé de stabilisation de mercure métallique sous forme de sulfure de mercure, le procédé comprenant les étapes suivantes :
a) disperser du mercure métallique dans une solution aqueuse de polysulfure à l'aide d'un moyen de dispersion de façon à convertir le mercure métallique en sulfure de mercure ;
b) séparation du sulfure de mercure obtenu, caractérisé en ce que la solution de polysulfure a une teneur en soufre actif de 0,5 à 7 moles/kg, de préférence de 0,5 à 5 moles/kg, de préférence encore de 0,6 à 3,5 moles/kg.

Grâce à la dispersion du mercure métallique dans la solution aqueuse de polysulfure, le procédé selon l'invention permet de convertir le mercure métallique en sulfure de mercure de façon simple et efficace. La conversion est en effet réalisée en une seule étape et le taux de conversion est très élevé. Il est notamment supérieur ou égale à 99,8 %, de préférence supérieur ou égale à 99,9 %, de préférence encore supérieur ou égale à 99,99 %. Dans un mode de réalisation particulièrement préféré, le taux de conversion est supérieur ou égale à 99,999 %. A titre de comparaison, la Demanderesse a reproduit l'exemple 1 du brevet US 3,061,412 et ainsi a mis en évidence que le rendement du procédé décrit dans ce brevet basé sur une réaction en phase hétérogène entre du mercure métallique liquide et du soufre élémentaire solide à l'aide d'un mélangeur classique (mixeur) est nettement inférieur à celui du procédé selon l'invention (cf. Exemple 6).

La dispersion du mercure métallique dans la solution aqueuse de polysulfure à l'étape a) est effectuée à l'aide d'un moyen de dispersion. Tout moyen de dispersion permettant de disperser le mercure dans la solution de polysulfure et permettant la réaction entre le mercure métallique et le polysulfure de façon à former du sulfure de mercure avec un taux de conversion tel que défini ci-dessus peut être mis en oeuvre. A titre d'exemple, on peut citer l'utilisation d'ultrasons ou de mélangeurs à haut taux de cisaillement, tels que des disperseurs.

Comparé à une agitation mécanique classique, par exemple à l'aide d'un mixeur (anglais : blender), la dispersion du mercure métallique dans la solution aqueuse de polysulfure à l'aide d'un moyen de dispersion présente l'avantage d'améliorer le contact mercure - polysulfure. Sans vouloir être lié par une quelconque théorie, les inventeurs pensent que ceci permet d'une part d'accélérer la cinétique de la réaction et d'autre part d'améliorer le taux de rendement par rapport à une agitation mécanique classique du mélange polysulfure/mercure.

Ainsi, dans un mode de réalisation avantageux, les moyens de dispersions sont des ultrasons. Au-delà de l'effet de dispersion, les ultrasons ont également une action de désagrégation des microbilles de sulfure susceptibles d'encapsuler du mercure. Sans vouloir être lié par une quelconque théorie, les inventeurs pensent que cet effet de désagrégation améliore davantage le rendement de la conversion.

Dans un autre mode de réalisation avantageux, le moyen de dispersion est un mélangeur à haut taux de cisaillement, notamment un disperseur. De manière avantageuse, ce mélangeur est opéré à une vitesse de cisaillement (ou vitesse périphérique) de 9 mis à 24 m/s, de préférence de 14 mis à 17 m/s.

Indépendamment du moyen de dispersion choisi, l'étape a) est avantageusement conduite à une température supérieure ou égale à 60 °C, de préférence de 60 °C à 90 °C, de préférence encore de 70 °C à 90 °C et plus préférentiellement encore de 80 °C à 90 °C. La réalisation de la conversion du mercure métallique en sulfure de mercure à des températures supérieures ou égales à 60 °C élevée accélère en fait la cinétique de réaction et favorise la formation de sulfure de mercure sous forme de cinabre (sulfure de mercure rouge). Des températures plus basses favorisent la formation de sulfure de mercure sous forme de métacinabre (sulfure de mercure noir).

Ainsi, la dispersion du mercure métallique dans la solution de polysulfure et une température élevée concourent à une conversion complète ou quasi-complète du mercure métallique en mercure de sulfure. Une température élevée privilégie également la formation de cinabre qui présente l'avantage d'être thermodynamiquement plus stable que le métacinabre.

Par rapport à certains procédés de l'art antérieur, notamment ceux fonctionnant à sec à haute température avec du soufre en poudre ou fondu, les températures qualifiées comme élevées dans le cadre de la présente invention restent modérées. Les températures de traitement du procédé selon l'invention ainsi que la conduite de la conversion en milieu aqueux limitent ainsi les risques de diffusion de vapeur de mercure et d'inflammation.

La solution de polysulfure employée à l'étape a) est avantageusement une solution de polysulfure de métal alcalin ou alcalinoterreux, tel que par exemple du polysulfure de sodium ou de potassium. Cette solution peut être préparée par toute méthode connue de l'homme du métier. Elle peut être fabriquée par dissolution du soufre dans une solution de sulfure alcalin ou alcalinoterreux, par exemple de sodium, de potassium ou de calcium, de préférence de sodium. Elle peut également être préparée par dissolution de soufre dans une solution aqueuse d'hydroxyde alcalin ou alcalinoterreux, tels que de la soude, de la potasse, ou une solution aqueuse d'hydroxyde de calcium, de préférence dans de la soude. La solution de polysulfure présente avantageusement un rapport molaire S/Na₂S de 2,5 à 4,0, de préférence de 2,7 à 3,5 et plus préférentiellement de 3 à 3,3.

La solution de polysulfure a une teneur en soufre actif de 0,5 à 7 moles/kg, de préférence de 0,5 à 5 moles/kg, de préférence encore de 0,6 à 3,5 moles/kg. Dans un mode de réalisation particulier, la teneur en soufre actif est de 0,6 à 1,4 mole/kg, par exemple d'environ 1 mole/kg. Dans un autre mode de réalisation particulier la teneur en soufre actif est de 2,5 à 3,5 moles/kg, par exemple d'environ 3 moles/kg.

On entend par « soufre actif » (S_{actif}) le soufre à l'état d'oxydation zéro pouvant réagir avec le mercure dans une réaction d'oxydo-réduction pour former le sulfure de mercure.

Le mercure métallique mis en oeuvre à l'étape a) peut provenir de différentes sources. Il peut notamment provenir du démantèlement d'installations telles que les unités de production de chlore, de distillation du mercure à partir de matériaux souillés, de la purification des hydrocarbures extraits de certains gisements naturels ou de tout autre procédé de séparation et d'extraction du mercure métal. Le mercure peut également être issu de piles et batteries, instruments de mesure, amalgames dentaires. Le procédé de l'invention peut être appliqué même si le mercure métallique contient de l'eau, des sédiments fins ou d'autres pollutions minérales telles que des métaux lourds.

Au sens de la présente invention, on entend par « mercure métallique » du mercure élémentaire (Hg) à l'état d'oxydation 0.

Dans un aspect de la présente invention, le rapport massique S_{actif}/Hg est de 1 à 3, par exemple de 1,2 à 2,6, de préférence de 1,2 à 1,5, de préférence encore d'environ 1,3. De manière surprenante et inattendue, les inventeurs ont constaté qu'un excédent de soufre de 1,1 à 1,5, notamment d'environ 1,2 à environ 1,3 donne lieu à la formation de cinabre (α-HgS) tandis que des excédents de soufre plus élevés, par exemple de 2,6 ou plus conduisent à la formation de métacinabre (β-HgS).

Le rapport massique Hg/solution de polysulfure est avantageusement de 0,2 à 0,6. Dans un mode de réalisation particulièrement avantageux, le rapport massique Hg/solution de polysulfure est d'environ 0,6 et la teneur en soufre actif de la solution de polysulfure est d'environ 3 moles/kg. Il est ainsi possible de conduire le procédé d'installation dans un volume de réaction relativement restreint et d'améliorer ainsi la compacité de l'installation de traitement.

La séparation du sulfure de mercure obtenu à l'étape a) peut être effectuée à l'aide de tout moyen de séparation adapté. A titre d'exemple, la séparation peut être effectuée par filtration, décantation, centrifugation. Dans un mode de réalisation, la séparation est réalisée à l'aide d'un filtre presse.

Le sulfure de mercure obtenu à l'issue du procédé selon l'invention présente une teneur en mercure volatile inférieure à la valeur limite d'exposition professionnelle qui est de 50 µg/m³ en France, et même inférieure à 10 µg/m³, selon le test en flacon laveur décrit à l'exemple 5. A titre de comparaison, la teneur en mercure volatile est de 800 µg/m³ pour le sulfure de mercure obtenu selon l'exemple 1 de US 3,061,412.

Le procédé selon l'invention présente également l'avantage d'optimiser la quantité de résidu de mercure à stocker du fait de l'absence d'excès de réactif dans le sulfure de mercure récupéré.

La solution de polysulfure usée restante après la séparation du sulfure de mercure à l'étape b) peut être réutilisée dans le procédé de l'invention. Cette réutilisation du polysulfure présente à la fois un avantage économique et écologique parce qu'elle maximise la consommation du soufre actif et minimise le rejet d'effluents devant être traités.

Selon un mode de réalisation avantageux, le procédé de l'invention comprend donc, après l'étape b), les étapes suivantes :
c) récupération de la solution de polysulfure après la séparation du sulfure de mercure à l'étape b) ;
d) addition de soufre et éventuellement de Na₂S à la solution de polysulfure récupérée à l'étape c) ;
e) répétition des étapes a) et b) en utilisant la solution de polysulfure issue de l'étape d) ;
f) éventuellement une ou plusieurs répétitions des étapes c) à e).

Selon ce mode de réalisation particulier au moins un, de préférence plusieurs recyclages de la solution de polysulfure sont effectués. Lors de ce(s) recyclage(s), l'addition de soufre à la solution de polysulfure à l'étape d) permet de maintenir la teneur en soufre actif de la solution de polysulfure constante. De manière avantageuse, le rapport molaire entre le soufre ajouté et le mercure métallique à traiter (Sajouté/Hg) est d'environ 1. Selon une variante, on ajoute également du Na₂S dans la solution de polysulfure recyclé. Chaque cycle de recyclage est ainsi conduit à essentiellement la même teneur en soufre actif que le cycle de départ.

Le procédé selon l'invention, avec ou sans recyclage de la solution de polysulfure est avantageusement mis en oeuvre par bâchée ce qui permet le démarrage et l'arrêt de la production de sulfure de mercure à tout moment selon les besoins.

La présente divulgation concerne également une installation de traitement pour la mise en oeuvre du procédé de stabilisation de mercure sous forme de sulfure de mercure, ladite installation comprenant :
- un réacteur apte à recevoir une solution aqueuse de polysulfure et du mercure métallique et équipé d'au moins un moyen de dispersion pour disperser le mercure métallique dans la solution de polysulfure de façon à convertir le mercure métallique en sulfure de mercure, et
- des moyens de séparation du sulfure de mercure formé.

Les moyens de dispersion et de séparation pouvant être utilisés sont ceux décrit ci-avant en rapport avec le procédé de stabilisation de mercure selon l'invention. Lorsque l'on utilise un disperseur, celui-ci est avantageusement installé en fond de réacteur pour tenir compte de la densité élevée du mercure métallique Le réacteur est de préférence également équipé de moyens d'agitation supplémentaires configurés pour assurer l'homogénéité de la suspension.

Les moyens de séparation pouvant être utilisés sont ceux décrit ci-avant en rapport avec le procédé de stabilisation de mercure selon l'invention. Dans un mode de réalisation préféré, on utilisera un filtre presse.

Dans un mode alternatif, le réacteur est également équipé de moyens de chauffage de façon à pouvoir effectuer la conversion de mercure en sulfure de mercure à une température élevée, notamment une température supérieure ou égale à 60 °C, de préférence de 60 °C à 90 °C, de préférence encore de 70 °C à 90 °C et plus préférentiellement encore de 80 °C à 90 °C.

L'installation peut également comprendre des moyens de stockage, telle qu'une cuve de stockage, de la solution de polysulfure usée. Ces moyens de stockage sont avantageusement reliés au réacteur de façon à pouvoir recycler la solution de polysulfure usée.

L'invention est décrite plus en détail ci-après, à l'aide des exemples suivants qui ne sont nullement limitatifs mais sont donnés à titre d'exemple uniquement.

### EXEMPLES

### Préparation des solutions de polysulfure

Les solutions de polysulfure utilisées dans les exemples qui suivent ont été fabriquées par dissolution de fleur de soufre dans une solution de sulfure de sodium.

La solution de sulfure de sodium a été préparée à partir de sulfure de sodium en écaille de qualité technique. Ce composé contient 60% de Na₂S.

Les compositions exactes des différentes solutions de polysulfures utilisées sont rapportées dans le tableau 1 ci-dessous.

**Tableau 1**

| Exemple | Eau (g) | Na₂S pur (g) | Na₂S pur (moles) | S (g) | S (moles) | Na₂S/S (moles/moles) | S_{actif} (moles) | c(S_{actif)} (moles/kg) |
|---|---|---|---|---|---|---|---|---|
| 1 | 68,6 | 1,24 | 0,02 | 1,57 | 0,05 | 3,08 | 0,03 | 0,46 |
| 2 | 1000 | 22,10 | 0,28 | 29,92 | 0,94 | 3,30 | 0,65 | 0,61 |
| 3 | 1000 | 44,20 | 0,57 | 59,84 | 1,87 | 3,30 | 1,30 | 1,15 |
| 3bis | 1000 | 68,00 | 0,87 | 92,06 | 2,88 | 3,30 | 2,01 | 1,66 |
| 4 | 1000 | 44,40 | 0,57 | 54,65 | 1,71 | 3,00 | 1,14 | 1,01 |
| 5 | 300 | 53,28 | 0,68 | 65,58 | 2,05 | 3,00 | 1,37 | 3,01 |

Lors de la préparation de la solution de polysulfure, une partie du sulfure de sodium employé réagit avec une partie du soufre ajouté dans une réaction secondaire de dismutation pour former du thiosulfate. Le soufre à l'état d'oxydation zéro restant est le soufre actif. Dans le cadre de la présente invention, on considère que la quantité en mole de soufre actif dans la solution de polysulfure correspond à la quantité en mole de soufre employé à laquelle on soustrait l'équivalent en mol du sulfure ajouté dans la solution.

### Exemple 1 : Agitation mécanique classique

Dans un bécher de 250 ml on a mélangé 2,07 g de Na₂S technique (soit 1,24 g de Na₂S pur), 1,57 g de soufre et 68.6 g d'eau. La solution de polysulfure résultante avait un rapport molaire S/Na₂S de 3 et une teneur en soufre actif de 0,46 moles/kg.

Après dissolution du soufre, 5 g de mercure métallique ont été introduits.

Le mélange était agité par un barreau aimanté tournant à la vitesse de 300 t/min. On observe rapidement la formation d'un dépôt noir de sulfure de mercure. Après 4h30 de réaction une observation visuelle ne permettait plus de distinguer du mercure métallique. Le rendement de la conversion atteint plus de 90%. 1,17 g de soufre ont alors été rajouté.

La cinétique de la réaction diminue au cours du temps. Ainsi, après plus de 24 heures d'agitation, même avec un excès de soufre de 2,6 fois la stoechiométrie, le rendement de conversion ne dépasse pas 99.5%. Ce rendement relativement faible semble être dû à l'encapsulation de mercure dans des microsphères de sulfure de mercure. Ce mercure devient alors difficilement inaccessible dans les conditions d'agitation classiques.

### Exemple 2 : Utilisation d'une sonde génératrice d'ultrasons (rapport massique S_{actif}/Hg de 2,6)

Pour cet exemple, sonde radiale ultrasons L250mm - 20 kHz - 300W de marque Sinaptec composée d'un générateur d'ultrason NexTgen d'une fréquence de 20 kHz ainsi que d'une sonde à effet radial qui permet une diffusion homogène des ultrasons sur toute sa hauteur.

Une solution de polysulfure ayant une teneur en soufre actif de 0,61 mole/kg et un rapport molaire S/Na₂S de 3,3 a été préparée par ajout de 36.8 g de Na₂S technique (soit 22,1 g de Na₂S pur) et 29,9 g de soufre dans un litre d'eau déminéralisée.

17,5 g de mercure métallique ont été mélangés dans 350 mL de cette solution de polysulfure (rapport molaire S_{actif}/Hg de 2,6). Le mélange a été placé dans un erlenmeyer de 400 ml. La sonde était maintenue par une potence et était immergée dans la solution. La réaction démarrait à température ambiante. La température augmentait jusqu'à atteindre 80°C au cours de l'essai. De l'eau était rajoutée régulièrement afin de compenser l'évaporation et stabiliser la température.

Après le premier cycle de traitement, 9 cycles de recyclage ont été opérés. Dans tous les cycles de recyclage, la quantité de mercure ajouté est identique à celle du premier cycle (17,5 g de Hg pour 350 mL de filtrat du cycle n-1). Les résultats sont résumés dans le tableau 2 ci-après.

**Tableau 2**

| **Cycle n°** | **S ajouté (g)** | **Na₂S ajouté (g)** | **pH initial** | **Temps** | **Solide** | **conversion %** |
|---|---|---|---|---|---|---|
| 1 | 0 | 0 | na | 2h | Noir | 99,9995 |
| 2 | 2,9 | 0 | na | 2h | Noir | 99,9999 |
| 3 | 2,91 | 0 | 11,9 | 2h | Noir | 99,9999 |
| 4 | 2,91 | 0 | na | 2h | Noir | 99,9165 |
| 5^{a} | 2,91 | 0 | 12 | 2h | Noir | 99,9304 |
| 6^{a} | 2,92 | 0 | 12 | 2h30 | Noir | 99,9524 |
| 7^{a} | 2,92 | 2,15 | 11 | 2h | Noir | 99,9991 |
| 8 | 2,89 | 2,17 | 11,8 | 2h | Noir | 99,9999 |
| 9 | 2,89 | 2,14 | 12 | 1h30 | Brun | 99,9994 |
| 10 | 2,32 | 0 | na | 2h | Rouge | 99,9999 |

| | | | | | | |
|---|---|---|---|---|---|---|
| ^{a} Ajout NaOH pour mise à pH | | | | | | |

Ces essais montrent qu'une dispersion du mercure à l'aide d'ultrasons permet d'augmenter considérablement le taux de conversion du mercure métallique en sulfure de mercure. Lors du recyclage l'ajout supplémentaire de sulfure améliore le taux de conversion. Le dernier cycle (cycle n° 10) a été réalisé avec moins de soufre que les cycles précédents (80% de la valeur théorique). Cet essais a permis de mettre en évidence qu'une diminution de l'excédent de soufre par rapport au mercure oriente la réaction vers la forme α-HgS rouge alors qu'en plus fort excédent la forme β-HgS noire est favorisée.

### Exemple 3 : Utilisation d'une sonde génératrice d'ultrasons (rapport massique S_{actif}/Hg de 1,3)

L'essai de l'exemple 2 a été répété avec une solution de polysulfure obtenue en mélangeant 73,7 g de Na₂S technique (soit 44,2 g de Na₂S pur) et 59,8 g de soufre dans 1 litre d'eau déminéralisée. La teneur en soufre actif était de de 1,15 moles/kg et le rapport molaire S/Na₂S de 3,3. L'excédent de soufre par rapport à la stoechiométrie a été fixé à 1,3. La quantité de mercure engagée était de 70,2 g pour 350 mL de solution de polysulfure.

Après le premier cycle de traitement, 4 cycles de recyclage ont été opérés. Dans tous les cycles de recyclage, la quantité de mercure ajouté est identique à celle du premier cycle (70,2 g de Hg pour 350 mL de filtrat du cycle n-1). Les résultats sont résumés dans le tableau 3 ci-après.

**Tableau 3**

| **Cycle n°** | **S ajouté (g)** | **Na₂S ajouté (g)** | **pH initial** | **Temps** | **Solide** | **Conversion %** |
|---|---|---|---|---|---|---|
| **1** | **0** | **0** | **na** | **2h** | **Rouge** | 99,9999 |
| **2** | **11,3** | **0** | **12,5** | **2h** | **Rouge** | 99,9675 |
| **3** | **11,3** | **0** | **12,5** | **2h30** | **Rouge** | 99,8904 |
| **4** | **11,3** | **2,14** | **12,5** | **2h** | **Rouge** | 99,9999 |
| **5** | **11,1** | **1,32** | **na** | **2h** | **Marron** | 99,9628 |

Les résultats sont comparables à ceux de l'exemple 2. La production de la forme rouge α-HgS est confirmée pour un rapport S_{actif}/Hg=1,3. Un apport de sulfure complémentaire lors des cycles de recyclage améliore le taux de conversion. La baisse du rendement de conversion pour le cycle n° 5 malgré l'ajout de sulfure est due à la dismutation du soufre (réaction secondaire donnant lieu à la formation de thiosulfate) induite par cet ajout de sulfure complémentaire. Ce phénomène diminuant la quantité de soufre actif disponible peut être contré en augmentant la quantité de soufre ajouté.

Un autre essai (Exemple 3 bis) a été réalisé avec une solution de polysulfure préparée à l'aide de 113,3g de Na₂S technique (68 g de Na₂S pur), 92,1 g de soufre et 1 litre d'eau déminéralisée. La teneur en soufre actif était alors 1,66M avec un rapport molaire S/Na₂S = 3,3. Le rapport massique S_{actif}/Hg a été fixé à 1,3, soit 105 g de mercure pour 350 mL de solution de polysulfure. La quantité de mercure traité avoisine ainsi 30% de la masse de solution de polysulfure. Après 2h avec la sonde à ultrasons, le produit obtenu est rouge et le rendement de la conversion est de 99,999%.

### Exemple 4 : Utilisation d'un disperseur (teneur en soufre actif 1M, rapport massique S_{actif}/Hg de 1,2)

Pour cet exemple, un disperseur de laboratoire Ultra-Turrax T18 de marque IKA équipé d'un outil 19G (19 mm de diamètre) a été utilisé. La vitesse de rotation est réglable entre 3000 et 25000 t/mn. Il faut noter qu'aux vitesses élevées supérieures à 17 000 t/mn environ, les frottements entraine une élévation de la température du milieu.

Une série de 20 essais avec recyclage de la solution ont été réalisés dans les conditions suivantes :
La solution de polysulfure a été préparée avec 74 g de Na2S technique (44.4 g de Na2S pur), 54.6 g de soufre et 1 litre d'eau déminéralisée.
La teneur en soufre actif de la solution de polysulfure était de 1,01 mole/kg avec un rapport molaire S/Na₂S = 3
La quantité de mercure traité par cycle était de 190 g soit un rapport massique S_{actif}/Hg = 1.2
Vitesse d'agitation de 15 000 à 18 000 t/mn
Temps de réaction : 1h50
Température de départ : 80°C

Un litre de la solution de polysulfure était placée dans une fiole conique. Le disperseur était maintenu par une potence et plongé dans le mélange. A l'issue du temps de réaction indiqué, le mélange est filtré à l'aide d'un filtre Büchner. Le gâteau est récupéré par filtration et conservé sans être séché pour les analyses ultérieures.

Les résultats sont reportés dans le tableau 4 ci-après :

**Tableau 4**

| | **Mercure (g)** | **Na₂S (g)** | **S (g)** | **NaOH en solution 50% (g)** | **Conversion (%)** |
|---|---|---|---|---|---|
| Cycle 1 (initial) pour 1000 ml eau | 190 | 74 | 54,7 | | 99,99995 |
| Cycle 2 | 190 | 7,5 | 30,3 | 10 | 99,99958 |
| Cycle 3 | 190 | 7,5 | 30,3 | | 99,99991 |
| Cycle 4 | 190 | 7,5 | 30,3 | | 99,99998 |
| Cycle 5 | 190 | 0 | 36 | 10 | 99,99998 |
| Cycle 6 | 190 | 0 | 30,3 | | 99,98740 |
| Cycle 7 | 190 | 7,5 | 32 | | 99,99995 |
| Cycle 8 | 190 | 7,5 | 32 | | 99,99883 |
| Cycle 9 | 190 | 0 | 30,3 | | 99,99999 |
| Cycle 10 | 190 | 7,5 | 32,6 | | 99,99935 |
| Cycle 11 | 190 | 0 | 30,3 | 6 | 99,99998 |
| Cycle 12 | 190 | 0 | 30,3 | 6 | 99,99920 |
| Cycle 13 | 190 | 3,75 | 31 | | 99,99997 |
| Cycle 14 | 190 | 3,75 | 31 | | 99,99998 |
| Cycle 15 | 190 | 3,75 | 31 | | 99,99994 |
| Cycle 16 | 190 | 3,75 | 31 | | 99,99999 |
| Cycle 17 | 190 | 3,75 | 31 | | 99,99999 |
| Cycle 18 | 190 | 3,75 | 31 | | 99,99998 |
| Cycle 19 | 190 | 3,75 | 31 | | 99,99999 |
| Cycle 20 | 190 | 3,75 | 32 | | 99,99999 |
| **Total** | **3800** | **149** | **648,4** | **32** | |
| **moyenne** | | | | | **99,9992** |

Les essais n'ont pas tous été réalisés dans les mêmes conditions. Les cycles 1 à 6 ont été réalisés dans un bain métallique carré, les autres essais ont été réalisés dans un erlenmeyer de 1 litre. Pour les cycles 1 à 12 l'ajout de sulfure et la compensation de la dismutation du soufre n'ont pas été systématiques. La solution a été chauffée au départ à 80°C mais la température n'a pas été maintenue constante au cours de la réaction. La vitesse d'agitation était constante à 18 000 t/mn.

A partir du cycle 13, la procédure a été plus systématique avec un ajout de sulfure constant correspondant à 5% de la quantité initiale et une compensation de la dismutation du soufre. La vitesse du disperseur a été réglée à 18 000 t/mn pendant les 15 premières minutes puis à 1500 t/mn ensuite. On observe une conversion de la forme métacinabre vers la forme cinabre après 50 minutes de temps de réaction. Le sulfure de mercure obtenu est alors d'une qualité constante avec un taux de conversion supérieur à 99.9999 %.

Un test de lixiviation selon la norme NF EN 12457-2 réalisé avec ce même échantillon moyen donne une valeur de mercure lixiviable de 1.1 mg/kg. Si on filtre le lixiviat à un seuil de 0.2µm (au lieu de 0.45µm pour la norme), la valeur est de 0.1 mg/kg. Ceci indique que le mercure mesuré n'est pas du mercure soluble mais est constitué de fines particules de HgS.

### Exemple 5 : Utilisation d'un disperseur (teneur en soufre actif 3M, rapport molaire S/Na₂S = 3,01, rapport massique S_{actif}/Hg de 1,2)

La solution de polysulfure a été réalisée avec 88,8g de Na₂S technique (soit 53,3 g de Na₂S pur), 65,6g de soufre et 300 ml d'eau déminéralisée. 228,4 g de mercure métallique ont été ajoutés.

Les essais ont été réalisés selon le même protocole qu'à l'exemple 4 à l'exception du volume de flacon qui était de 500 ml au lieu d'un litre. Du fait que la réaction est sensiblement plus exothermique qu'avec une solution de polysulfure ayant une teneur en soufre actif de 1 M, la température de départ était de 50 à 60 °C. La température atteignait 80 à 90°C après 10 minutes de réaction environ.

Un dosage de mercure volatil a été effectué. Pour ce test, le Mercury Tracker 3000 de la marque Mercury Instrument a été utilisé. En effectuant un test dit « test en flacon laveur ». Pour ce test, un échantillon du solide obtenu de 100 g est placé pendant 24 heures dans un flacon laveur d'un litre fermé. Le tube de sortie est ensuite connecté à l'analyseur de gaz et la valeur est notée après stabilisation de quelques minutes.

Trois cycles successifs ont été réalisés en recyclant la solution réactionnelle. Les résultats sont regroupés dans le tableau 5.

**Tableau 5**

| | **Mercure (g)** | **Na₂S (g)** | **S (g)** | **Conversion (%)** | **Lixiviation** NF EN 12457-2 **(mg/Kg)** | **Hg volatil (test en flacon laveur) (µg/m³)** |
|---|---|---|---|---|---|---|
| Cycle 1 (initial) pour 300ml eau | 228,4 | 88,8 | 65,6 | 99,99997 | 0,7 * | 1 |
| Cycle 2 | 228,4 | 8,9 | 38,5 | 99,99994 | 0,07 | 8 |
| Cycle 3 | 228,4 | 8,9 | 38,5 | 99,99997 | 0,1 | 1 |

| | | | | | | |
|---|---|---|---|---|---|---|
| **0.2 mg*/*kg avec filtration à 0.2µm* | | | | | | |

Le virage de la forme métacinabre à la forme cinabre se produit après 10 à 20 minutes au lieu de 50 minutes dans le cas d'une solution de polysulfure ayant une teneur en soufre actif de 1 M. Pour le cycle 3, le gâteau de HgS n'a pas été rincé lors de la filtration. On notera que cela ne nuit pas à la qualité du produit. Au contraire, à la suite du test de lixiviation on observe une absence de particules très fines lors de la filtration. La qualité des produits obtenus est équivalente voir supérieure à celle obtenue précédemment avec un rendement de plus de 99.9999%, une lixiviation du mercure entre 0.07 à 0.7 mg/kg et une concentration de mercure volatil de 1 à 8 µg/m3.

### Exemple 6 : Transformation de Hg en HgS selon l'Exemple 1 de US 3,061,412

L'Exemple 1 du brevet US 3,061,412 a été répété avec les même quantités de produits de départ et la même durée de mélange en utilisant un mixeur (anglais : blender) de la marque Kenwood^{®} équivalent au mélangeur de la marque Waring^{®} utilisé dans le brevet. On observe une réaction exothermique et récupère une boue noire très épaisse. Cette boue a été filtrée et rincée à l'eau.

Le rendement de conversion est de 94,45%. La concentration de mercure volatil dans le ciel gazeux d'un flacon d'un litre contenant 100 g du résidu, mesuré avec un analyseur Mercury Tracker 3000 en plaçant la sonde au-dessus du flacon, est de 800 µg. Cette méthode de mesure donne des valeurs moins élevées que le test en flacon laveur utilisé à l'exemple 5.

## Revendications

1. Procédé de stabilisation de mercure métallique sous forme de sulfure de mercure, le procédé comprenant les étapes suivantes :
a) dispersion de mercure métallique dans une solution aqueuse de polysulfure de façon à convertir le mercure métallique en sulfure de mercure ;
b) séparation du sulfure de mercure,
**caractérisé en ce que** la solution de polysulfure a une teneur en soufre actif de 0,5 à 7 moles/kg, de préférence de 0,5 à 5 moles/kg, de préférence encore de 0,6 à 3,5 moles/kg.

2. Procédé selon la revendication 1, dans lequel la dispersion du mercure métallique est réalisée à l'aide d'ultrasons ou à l'aide d'un disperseur.

3. Procédé selon la revendication 1 ou 2, dans lequel la dispersion du mercure métallique est réalisée à l'aide d'ultrasons.

4. Procédé selon la revendication 1 ou 2, dans lequel la dispersion du mercure métallique est réalisée à l'aide d'un disperseur.

5. Procédé selon l'une quelconque des revendications précédentes, dans lequel l'étape a) est réalisée à une température supérieure ou égale à 60 °C.

6. Procédé selon l'une quelconque des revendications précédentes, dans lequel la solution de polysulfure présente un rapport molaire S/Na₂S de 2,5 à 4,0, de préférence de 2,7 à 3,5 et plus préférentiellement de 3 à 3,3.

7. Procédé selon la revendication 1, dans lequel la solution de polysulfure a une teneur en soufre actif de 2,5 à 3,5 moles/kg.

8. Procédé selon l'une quelconque des revendications précédentes, dans lequel le rapport massique S_{actif}/Hg est de 1 à 3, de préférence de 1,2 à 2,6, de préférence encore de 1,2 à 1,5 et plus préférentiellement encore d'environ 1,3.

9. Procédé selon l'une quelconque des revendications précédentes, **caractérisé en ce qu'**il comprend après l'étape b) les étapes suivantes :
c) récupération de la solution de polysulfure après la séparation du sulfure de mercure à l'étape b) ;
d) addition de soufre et éventuellement de Na₂S à la solution de polysulfure récupérée à l'étape c) ;
e) répétition des étapes a) et b) en utilisant la solution de polysulfure issue de l'étape d) ;
f) éventuellement une ou plusieurs répétitions des étapes c) à e).

## Patentansprüche

1. Verfahren zur Stabilisierung von metallischem Quecksilber in Form von Quecksilbersulfid, wobei das Verfahren die folgenden Schritte umfasst:
a) Dispersion von metallischem Quecksilber in einer wässrigen Polysulfidlösung, um das metallische Quecksilber in Quecksilbersulfid umzuwandeln,
b) Abtrennung des Quecksilbersulfids,
**dadurch gekennzeichnet, dass** die Polysulfidlösung einen Gehalt an aktivem Schwefel von 0,5 bis 7 mol/kg, bevorzugt von 0,5 bis 5 mol/kg, besonders bevorzugt von 0,6 bis 3,5 mol/kg aufweist.

2. Verfahren nach Anspruch 1, wobei die Dispersion des metallischen Quecksilbers mittels Ultraschall oder mittels eines Dispergiergeräts durchgeführt wird.

3. Verfahren nach Anspruch 1 oder 2, wobei die Dispersion des metallischen Quecksilbers mittels von Ultraschall durchgeführt wird.

4. Verfahren nach Anspruch 1 oder 2, wobei die Dispersion des metallischen Quecksilbers mittels eines Dispergiergeräts durchgeführt wird.

5. Verfahren nach einem der vorhergehenden Ansprüche, wobei Schritt a) bei einer Temperatur von 60 °C oder höher durchgeführt wird.

6. Verfahren nach einem der vorhergehenden Ansprüche, wobei die Polysulfidlösung ein S/Na₂S-Molverhältnis von 2,5 bis 4,0, bevorzugt von 2,7 bis 3,5 und besonders bevorzugt von 3 bis 3,3 aufweist.

7. Verfahren nach Anspruch 1, wobei die Polysulfidlösung einen Gehalt an aktivem Schwefel von 2,5 bis 3,5 mol/kg aufweist.

8. Verfahren nach einem der vorhergehenden Ansprüche, wobei das Massenverhältnis Sₐₖₜᵢᵥ/Hg 1 bis 3, bevorzugt 1,2 bis 2,6, weiter bevorzugt 2,7 bis 3,5 und besonders bevorzugt 3 bis 3,3, beträgt.

9. Verfahren nach einem der vorhergehenden Ansprüche, **dadurch gekennzeichnet, dass** es nach Schritt b) die folgenden Schritte umfasst:
c) Gewinnung der Polysulfidlösung nach Abtrennung des Quecksilbersulfids in Schritt b),
d) Zugabe von Schwefel und gegebenenfalls Na₂S zu der in Schritt c) gewonnenen Polysulfidlösung,
e) Wiederholung der Schritte a) und b) unter Verwendung der Polysulfidlösung aus Schritt d),
f) gegebenenfalls eine oder mehrere Wiederholungen der Schritte c) bis e).

## Claims

1. Process for stabilising metallic mercury in the form of mercury sulphide, the process comprising the following steps:
a) dispersion of metallic mercury in an aqueous polysulphide solution so as to convert metallic mercury into mercury sulphide;
b) separation of the mercury sulphide,
wherein the active sulphur content in the polysulphide solution is from 0.5 to 7 mol/kg, preferably from 0.5 to 5 mol/kg, and more preferably from 0.6 to 3.5 mol/kg.

2. Process according to claim 1, in which dispersion of metallic mercury is done using ultrasounds or a disperser.

3. Process according to claim 1 or 2, in which dispersion of metallic mercury is done using ultrasounds.

4. Process according to claim 1 or 2, in which dispersion of metallic mercury is done using a disperser.

5. Process according to any one of the previous claims, in which step a) is done at a temperature higher than or equal to 60°C.

6. Process according to any one of the previous claims, in which the polysulphide solution has an S/Na₂S molar ratio equal to 2.5 to 4.0, preferably from 2.7 to 3.5 and more preferably from 3 to 3.3.

7. Process according to claim 1, in which the active sulphur content in the polysulphide solution is from 2.5 to 3.5 mol/kg.

8. Process according to any one of the previous claims, in which the S_{active}/Hg mass ratio is 1 to 3, preferably from 1.2 to 2.6, more preferably from 1.2 to 1.5, and even more preferably about 1.3.

9. Process according to any one of the previous claims, **characterised in that** it includes the following steps after step b):
c) recovery of the polysulphide solution after the separation of mercury sulphide in step b);
d) addition of sulphur and possibly Na₂S to the polysulphide solution recovered in step c);
e) repetition of steps a) and b), using the polysulphide solution derived from step d);
f) possibly, one or several repetitions of steps c) to e).
